# EUROPEAN PATENT APPLICATION

(11) **EP 4 786 157 A1**
(43) Date of publication of application: **05.08.2026**
(21) Application number: 25155626.2
(22) Date of filing: 03.02.2025
(51) Int. Cl.: B32B 1/00, B32B 7/022, B32B 25/08, B32B 27/38, B32B 27/40

(54) **AN EROSION PROTECTION LAMINATE**

(71) Applicant: Trelleborg Retford Limited, Tewkesbury Business Park, Gloucestershire GL20 8UQ (GB)
(72) Inventor: Brindle, Philip Wayne, Soham, Ely Cambridgeshire, CB7 6AJ (GB); Busby, Evangeline Charlotte, Retford DN22 7AX (GB); Nevin, Adam Christopher, Nottingham, NG15 9GF (GB)
(74) Representative: AWA Sweden AB

(57) **Abstract**

An erosion protection laminate (10), comprising a first layer (11) and a second layer (12) arranged over the first layer (11),
the first layer (11) comprising an auxetic material;
the second layer (12) comprising a polymer.

## Description

### TECHNICAL FIELD

The present inventive concept relates, in general, to an erosion protection laminate.

### BACKGROUND

An erosion protection layer protects a surface from erosion. For example, the erosion protection layer may protect the surface from erosion caused by rain, hail, and other atmospheric factors. Erosion protection is used e.g. for a wind turbine blade, in particular for the leading edge of the wind turbine blade. The eroding effect of rain and hail may be much higher on the wind turbine blade than on the ground, due to the high speed of the wind turbine blade. Erosion protection layers come in the form of shells, paint and tape.

### SUMMARY

It is an objective of the present inventive concept to provide an improved erosion protection layer in the form of an erosion protection laminate. In particular, it is an objective to provide an improved erosion protection laminate for a fiber-reinforced polymer surface and/or an improved erosion protection laminate for a propeller blade, such as a wind turbine blade.

It is an objective to provide a durable erosion protection laminate.

It is an objective to facilitate efficient propeller blades, in particular efficient wind turbine propeller blades. It is an objective to facilitate energy efficient propeller blades.

It is an objective to facilitate propeller blades which maintain their aerodynamic properties over time. It is an objective to facilitate propeller blades having low maintenance costs.

These and other objectives of the inventive concept are at least partly met by the invention as defined in the independent claims. Preferred embodiments are set out in the dependent claims.

According to a first aspect there is provided an erosion protection laminate, comprising a first layer and a second layer arranged over the first layer,
the first layer comprising an auxetic material,
the second layer comprising a polymer.

An auxetic material is a material with a negative Poisson's ratio. Thus, when an auxetic material is stretched, it becomes thicker perpendicular to the direction of the stretch. This is in contrast to most materials which become thinner perpendicular to the direction of the stretch. Accordingly, the auxetic material of the first layer may be a material that expands in a first direction when stretched in a second direction perpendicular to the first direction.

The auxetic material of the first layer may comprise a molecular auxetic material. Such a molecular auxetic material of the first layer may comprise a polyurethane liquid crystal and/or an acrylate liquid crystal.

Alternatively, or additionally, the auxetic material of the first layer may comprise a structural auxetic material. A structural auxetic material may be a material comprising a structure defining a repeating pattern of voids. The structural auxetic material may comprise a plurality of interconnected members separated by the voids. The voids may be empty or at least partially filled with a material different from the material of the interconnected members.

As mentioned, the second layer is arranged over the first layer. For example, the second layer may be abutting the first layer.

The erosion protection laminate may comprise further layers, in addition to the first and second layer. The erosion protection laminate may comprise a layer arranged under the first layer. The erosion protection laminate may comprise a layer arranged over the first layer. The erosion protection laminate may comprise a layer arranged between the first and second layers.

The erosion protection laminate may be arranged on the surface that is to be protected with the first layer facing the surface. Accordingly, impacting particles or droplets may hit the second layer. Alternatively, in case a further layer is arranged over the second layer, impacting particles or droplets may hit said further layer. Examples of impacting particles are hail, sand etc. Examples of impacting droplets are water droplets, e.g. rain droplets. The impacting particles or droplets may impact at great speed, e.g. if the surface is moving at great speed.

It is a realization that the auxetic material of the first layer may dissipate the energy of an impacting particle or droplet.

It is a realization that the second layer may distribute the energy (and/or force) of the impacting particles or droplets onto the auxetic material of the first layer. Thereby, the auxetic material of the first layer may protect the underlying surface more effectively when the second layer is arranged over the first layer, e.g. by more effectively dissipating the impacting energy.

In addition to dissipating energy, the first layer may also distribute the remaining energy on the underlying surface.

It is a realization that the combination of the first and second layer effectively protects the surface on which the erosion protection laminate is arranged. The auxetic material may effectively dissipate energy. It is a realization that if the auxetic material is used without the second layer, the auxetic material may itself degrade.

As a first example, an auxetic material which is soft and/or thin may degrade if used without the second layer. Molecular auxetic material may be soft and/or thin. Thus, molecular auxetic material may benefit from being arranged under the second layer comprising the polymer.

As a second example, the energy dissipating properties of the auxetic material may be most effectively utilized if the impact is distributed over a large area. As an example, a molecular auxetic material comprising liquid crystals may be most effectively utilized if the impact is distributed over a large number of the liquid crystals. As another example, a structural auxetic material comprising voids may be most effectively utilized if the impact is distributed over a large number of the voids.

It is a realization that the erosion protection laminate reduces the impact of particles or droplets on the surface on which the erosion protection laminate is arranged on. Thereby, the rate of erosion on the surface is reduced.

It is a realization that an auxetic material (structural or molecular) may be arranged to easily conform to a curved underlying surface, e.g. to conform to a leading edge of a wind turbine blade.

The erosion protection laminate may be arranged on a fiber-reinforced polymer, wherein the first layer is facing the fiber-reinforced polymer. The fiber-reinforced polymer may be a composite material made of a polymer matrix reinforced with fibres. The fibres may comprise glass fibres, carbon fibres, aramid fibres, or basalt fibres. Similarly, the erosion protection laminate may be configured to be arranged on a fiber-reinforced polymer. A structure made of fiber-reinforced polymer may be expensive and/or difficult to replace. For example, a propeller blade for e.g. a wind turbine, wherein the propeller blade comprises a fiber-reinforced polymer, may be expensive and/or difficult to replace. Thus, the erosion protection laminate may protect such a structure which is expensive and/or difficult to replace.

The erosion protection laminate may be a leading edge protection for a leading edge of a propeller blade.

The propeller blade may be a blade of a wind turbine or any other propeller blade, e.g. a propeller blade of an aircraft or a hovercraft. Alternatively, the propeller blade may be a propeller blade for use under water, e.g. a blade of a boat propeller or submarine propeller.

It is a realization that arranging the erosion protection laminate on a propeller blade enables the propeller blade to operate efficiently and reliably over a long periods. This may reduce downtime and/or maintenance costs. It is a realization that arranging the erosion protection laminate on a propeller blade maintains the aerodynamic properties of the propeller blade for a long time.

In view of the above, the erosion protection laminate may be arranged on a wind turbine blade; an aircraft propeller; a hovercraft propeller; a boat propeller; or a submarine propeller. However, the erosion protection laminate may be used for various other applications. For example, the erosion protection laminate may be arranged on an airplane wing (e.g. the leading edge of an airplane wing); a nose cone of an airplane, a rudder of a boat; or a sailboat foil.

The erosion protection laminate may be retrofitted to the object to be protected.

The erosion protection laminate may be a shell configured to be attached to the surface to be protected. The shell may be shaped as the surface to be protected. For example, the erosion protection laminate may have the shape of a leading edge of a propeller blade.

The erosion protection laminate may be a tape configured to be attached to the surface to be protected. For example, the erosion protection laminate may be a tape configured to be attached to a fiber-reinforced polymer. The erosion protection laminate may be a tape configured to be attached to a leading edge of a propeller blade.

As an alternative to retrofitting, the erosion protection laminate may be attached to the object to be protected during manufacturing. For example, the erosion protection laminate may be attached to a wind turbine blade during manufacturing of said wind turbine blade.

In the following, the first layer will be discussed.

As previously mentioned, the erosion protection laminate may be configured such that the auxetic material of the first layer comprises a molecular auxetic material.

In a molecular auxetic material, the auxetic properties may be inherent to the molecular structure of the material. Thus, the auxetic properties may be insensitive to the material's shape or size. Molecular auxetic materials may e.g. be shaped into thin layers. Thus, the first layer may be thin.

Further, a molecular auxetic material may facilitate an erosion protection laminate which is easy and/or inexpensive to manufacture. For example, an erosion protection laminate (e.g. an erosion protection laminate for retrofitting) may be produced by roll to roll lamination by merging the first and second layers from respective rolls. In this case, a first layer comprising a molecular auxetic material may comprise few or no voids, e.g. fewer voids than a structural auxetic material. Thus, reshaping of voids due to the strain in the roll to roll process may be avoided.

Further, a molecular auxetic material may facilitate an erosion protection laminate which is arranged on large and/or curved surfaces in an easy and/or inexpensive manner. For example, a layer of molecular auxetic material may be arranged over a large surface at low cost. It is a realization that it may be easier to arrange the auxetic material to conform to a curved surface without affecting the auxetic properties if the auxetic material is a molecular auxetic material, as compared to a structural auxetic material.

The molecular auxetic material of the first layer may comprise a polyurethane liquid crystal and/or an acrylate liquid crystal. Such materials have a high mechanical strength in addition to their auxetic properties. In a liquid crystal the molecules may be oriented in a common direction, e.g. aligned in a common direction.

The molecular auxetic material of the first layer may comprise an aligned nematic material which has a mechanical Freedericksz transition, as described in international patent publication WO 2019/077361 A1. WO 2019/077361 A1 is hereby included by reference. In particular, the molecular auxetic material of the first layer may comprise any material according to the examples of aligned nematic materials on pages 9-10 of WO 2019/077361 A1.

In case the auxetic material of the first layer comprises a molecular auxetic material, the first layer may advantageously be strained by 20% to 80% in at least one direction in a plane of the first layer. Accordingly, the molecular auxetic material may be pre-strained. Pre-strain may improve the auxetic properties of the molecular auxetic material. The reason is not fully understood but it is a hypothesis that pre-strain facilitates alignment of the molecules of the molecular auxetic material. If the erosion protection laminate is arranged on a leading edge of a propeller blade, the first layer may be strained (e.g. by 20% to 80%) in a direction perpendicular to the leading edge. Alternatively, the first layer may be strained (e.g. by 20% to 80%) in a direction parallel with the leading edge. If a layer on the propeller blade is released and it contracts in a direction of the leading edge, then the layer was strained in the direction of the leading edge. Similarly, if a layer on the propeller blade is released and it contracts in a direction perpendicular to the leading edge, then the layer was strained in the direction perpendicular to the leading edge.

As previously mentioned, the erosion protection laminate may be configured such that the auxetic material of the first layer comprises a structural auxetic material.

A structural auxetic material may be inexpensive. A structural auxetic may be made by readily available materials. For example, a polymer of a structural auxetic material in the first layer may be the same or similar as the polymer of the second layer.

A structural auxetic material may be easy to manufacture. For example, additive manufacturing of an auxetic material (e.g. a micro-scale auxetic material) on the second layer may be used.

A structural auxetic material may have a low weight, e.g. if the structural auxetic material comprises at least partially empty voids.

A structural auxetic material may be easy to recycle. As a first example, the structural auxetic material may be easy to recycle if a polymer of a structural auxetic material in the first layer is the same or similar as the polymer of the second layer. As a second example, the structural auxetic material may be easy to recycle if additive manufacturing is used.

As mentioned, a structural auxetic material may be a material comprising a structure defining a repeating pattern of voids. The structural auxetic material may comprise a plurality of interconnected members separated by the voids. The voids may be empty or at least partially filled with a material different from the material of the interconnected members.

A cell size of the repeating pattern may be in the range of 25-1000 µm. Cell sizes in the range 100-1000 µm or in the range 25-300 µm may be particularly advantageous.

A structure of the structural auxetic material may be any one of hourglass structure, bow tie structure, reentrant structure, star lattice, or chiral lattice.

The interconnected members may comprise a polymer. The interconnected members may comprise one or more of the following polymers: silicone, acrylate, urethane, urethane methacrylate, polylactic acid (PLA), acrylonitrile butadiene styrene (ABS), nylon, polycarbonate.

If the voids are at least partially filled, they may be filled with an expandable material or fluid.

The first layer may be thin. The first layer may e.g. have a thickness between 100 µm and 5 mm. In particular, the first layer may e.g. have a thickness between 100 µm and 1 mm. A thin layer may be easy and/or inexpensive to manufacture. A thin layer may be easy and/or inexpensive to arrange on large and/or curved surfaces.
In the following, the second layer will be discussed.

The polymer of the second layer may comprise epoxy and/or polyurethane. Such materials have a high mechanical strength and/or a high abrasion resistance and/or a high impact resistance. Additionally, such materials effectively distribute the energy (and/or force) of the impacting particles or droplets onto the auxetic material of the first layer. Additionally, such materials are temperature resistant and remain stable over a wide range of temperatures. Additionally, such materials have good bonding properties. For example, such materials may have good bonding properties to auxetic materials, e.g. to molecular auxetic materials.

The polymer of the second layer may have an abrasion resistance of at least 80 mm³ according to ISO 4649. This may provide sufficient protection for the first layer.

The polymer of the second layer may be non-porous. This may facilitate a high mechanical strength and/or a high abrasion resistance and/or a high impact resistance. Additionally, this may effectively distribute the energy (and/or force) of the impacting particles or droplets onto the auxetic material of the first layer. Thus, a porous layer may not be needed for energy dissipation. The function of energy dissipation may be provided by the first layer instead.

The polymer of the second layer may have a density of at least 0.9 g/cm³. Such a density give a high mechanical strength and/or a high abrasion resistance and/or a high impact resistance. Additionally, such a density may facilitate effective distribution of the energy (and/or force) of the impacting particles or droplets onto the auxetic material of the first layer.

In particular, the polymer of the second layer may have a density around the density of water. Thus, the polymer of the second layer may have a density in the range of 0.9-1.5 g/cm³, or 0.9-1.2 g/cm³. In particular, the polymer of the second layer may have a density just above the density of water. Thus, the polymer of the second layer may have a density in the range of 1.0-1.2 g/cm³.

The second layer may have a thickness between 100 µm and 15 mm. Such a thickness give a high mechanical strength and/or a high abrasion resistance and/or a high impact resistance. Additionally, such a thickness facilitate effective distribution of the energy (and/or force) of the impacting particles or droplets onto the auxetic material of the first layer.

The erosion protection laminate may be configured to have a breakthrough time of at least 10 hours when tested to DNV GL RP 0171 standard with 26.5 mm/hr rain intensity.

The erosion protection laminate may be configured to have an incubation time of at least 10 hours when tested to DNV GL RP 0171 standard with 26.5 mm/hr rain intensity. The incubation time may be defined as the initial stage of erosion where damage progresses without a visible change or significant loss in material mass. The incubation time period may be considered to end when the material starts to lose mass at a constant erosion rate.

An erosion protection laminate with the above mentioned breakthrough time and/or incubation time may be particularly suited for leading edge protection for a leading edge of a propeller blade.

The second layer of the erosion protection laminate may be a layer having a breakthrough time of at least 10 hours when tested to DNV GL RP 0171 standard with 26.5 mm/hr rain intensity.

The second layer of the erosion protection laminate may be a layer having an incubation time of at least 10 hours when tested to DNV GL RP 0171 standard with 26.5 mm/hr rain intensity.

In view of the above, the second layer may in itself be a layer suited for leading edge protection for a leading edge of a propeller blade. Said leading edge protection may be enhanced by adding the first layer comprising the auxetic material.

### BRIEF DESCRIPTION OF THE DRAWINGS

The above, as well as additional objects, features and advantages of the present inventive concept, will be better understood through the following illustrative and non-limiting detailed description, with reference to the appended drawings. In the drawings like reference numerals will be used for like elements unless stated otherwise.
Fig. 1a illustrates an erosion protection laminate.
Fig. 1b illustrates an erosion protection laminate.
Fig. 2a illustrates an erosion protection laminate on a fiber-reinforced polymer
Fig. 2b illustrates an erosion protection laminate on a propeller blade
Fig. 3a illustrates an erosion protection laminate for mounting on a propeller blade
Fig. 3b illustrates an erosion protection laminate for mounting on a propeller blade
Fig. 4a illustrates an erosion protection laminate on a propeller blade
Fig. 4b illustrates an erosion protection laminate on a propeller blade

### DETAILED DESCRIPTION

In cooperation with attached drawings, the technical contents and detailed description of the present invention are described thereinafter according to a preferable embodiment, being not used to limit the claimed scope. This invention may be embodied in many different forms and should not be construed as limited to the embodiments set forth herein; rather, these embodiments are provided for thoroughness and completeness, and fully convey the scope of the invention to the skilled person.

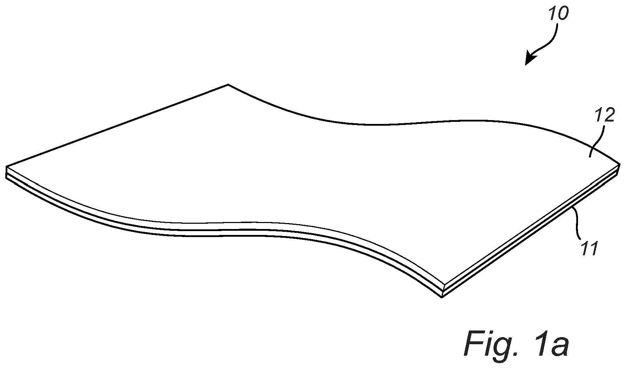

Fig. 1a illustrates an erosion protection laminate 10 comprising a first layer 11 and a second layer 12, wherein the first layer 11 comprises an auxetic material and the second layer comprises a polymer. The second layer 12 is arranged over the first layer 11.

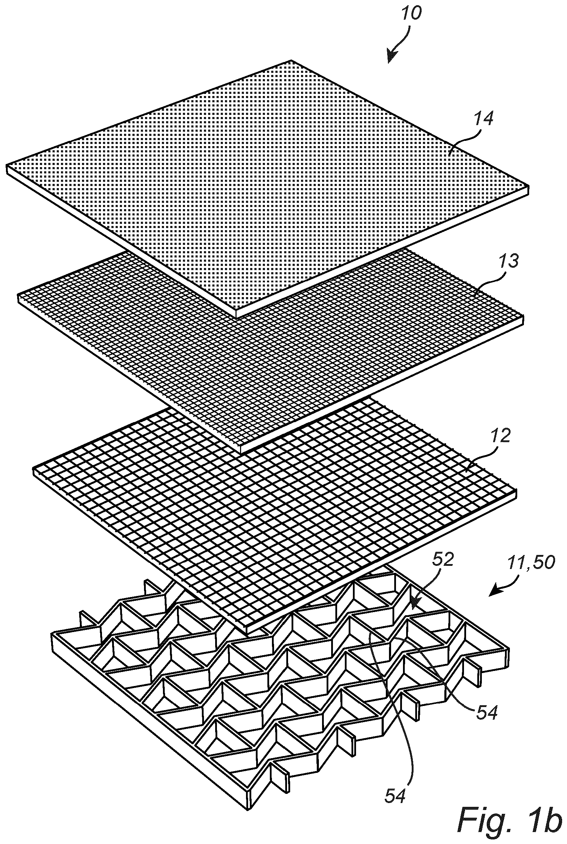

The erosion protection laminate 10 may, in addition to the first 11 and second layer 12, comprise further layers, as illustrated in Fig. 1b. Fig. 1b, is an exploded view of the erosion protection laminate 10, wherein the erosion protection laminate 10 is decomposed into its separate layers for illustrative purposes. Fig. 1b illustrates an erosion protection laminate 10 comprising a first layer 11, a second layer 12 over the first layer 11, a third layer 13 over the second layer 12, and a fourth layer 14 over the third layer 13, wherein the first layer 11 comprises an auxetic material and the second layer comprises a polymer. Alternatively, the erosion protection laminate may comprise a layer arranged under the first layer 11. Alternatively, the erosion protection laminate may comprise a layer arranged over the first layer 11. Alternatively, the erosion protection laminate may comprise a layer arranged between the first 11 and second 12 layers. Any of the further layers may comprise a polymer. Any of the further layers may comprise an auxetic material. In the illustration, the first layer 11 comprises a structural auxetic material 50 comprising voids 52 and interconnected members 54, as will be discussed further below.

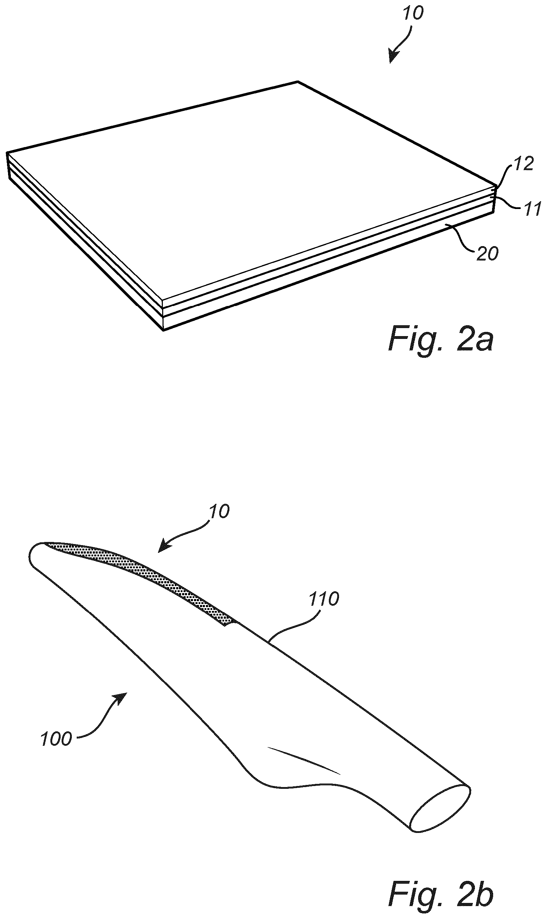

Fig. 2a illustrates an erosion protection laminate 10 arranged on a fiber-reinforced polymer 20, wherein the first layer 11 is facing the fiber-reinforced polymer 20. The first layer 11 may be attached to the fiber-reinforced polymer 20, e.g. by an adhesive. Thus, the first layer 11 may be abutting the fiber-reinforced polymer 20. The first 11 and second 12 layers may be joined to form the erosion protection laminate 10 which may subsequently be attached to the object to be protected (e.g. the fiber-reinforced polymer 20). Alternatively, the first 11 and second layer 12 may be sequentially applied to the object to be protected (e.g. the fiber-reinforced polymer 20). For example, the first layer 11 may be attached to the object to be protected (e.g. the fiber-reinforced polymer 20) and subsequently the second layer 12 may be attached to the first layer 11.

Fig. 2b illustrates an erosion protection laminate 10 arranged on a propeller blade 100, in this case a wind turbine blade. The propeller blade may comprise a fiber-reinforced polymer 20. The illustrated erosion protection laminate 10 is arranged on a leading edge 110 of the propeller blade 100. The erosion protection laminate 10 may cover the entire length of the leading edge 110 or, as illustrated, part of the length of the leading edge 110, e.g. the outermost part of the length of the leading edge 110.

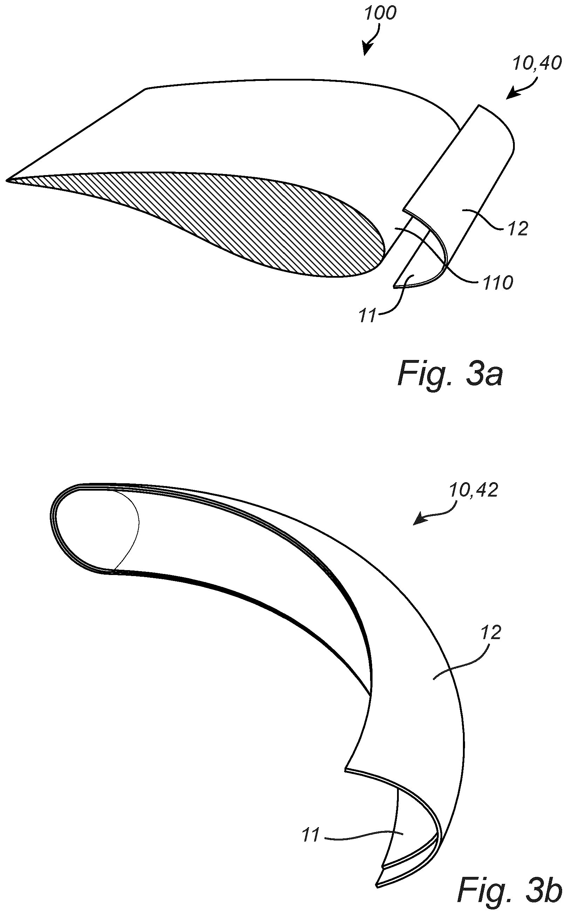

Figs 3a-b illustrates erosion protection laminates 10 configured to be attached to a leading edge 110 of a propeller blade 100.

Fig. 3a illustrates an erosion protection laminate 10 in the form of a tape 40 configured to be attached to a leading edge 110 of a propeller blade 100. The tape 40 may comprise an adhesive below or on the first layer 11 of the erosion protection laminate 10. The tape 40 may have a width sufficient to cover the leading edge 110 of a propeller blade 100. The tape 40 may have a width of at least 20 cm.

Fig. 3b illustrates an erosion protection laminate 10 in the form of a shell 42. The shell 42 may, as illustrated, have the shape of a leading edge 110 of a propeller blade 100. The shell 42 may be pre-cast, e.g. in the shape of a leading edge of a certain type of propeller blade. The shell 42 may have the shape of a half-pipe. For example, the shell 42 may have the shape of a half-pipe, wherein both ends of the half-pipe are open. Alternatively, the shell 42 may (as illustrated) have the shape of a half-pipe, wherein one end of the half-pipe is open and one end is closed (e.g. to fit over the tip of the propeller blade). The shell 42 may be flexible. The first layer 11 may be arranged at or towards the concave surface of the shell 42. The second layer 12 may be arranged at or towards the convex surface of the shell 42. The shell may comprise an adhesive on the concave surface of the shell 42, e.g. on the first layer 11.

In any of the presented examples, the auxetic material of the first layer 11 may comprise a molecular auxetic material, e.g. a polyurethane liquid crystal and/or an acrylate liquid crystal. The molecular auxetic material of the first layer 11 may comprise an aligned nematic material which has a mechanical Freedericksz transition. A first layer 11, comprising a molecular auxetic material, may be homogeneous. A first layer 11, comprising a molecular auxetic material, may be void free.

The auxetic material of the first layer 11 may comprise a structural auxetic material 50. The first layer 11 of the erosion protection laminate 10 in Fig. 1b is an example of a structural auxetic material 50. A structural auxetic material 50 may be a material comprising a structure defining a repeating pattern of voids 52. The structural auxetic material 50 may comprise a plurality of interconnected members 54 separated by the voids 52, as illustrated in Fig. 1b. The interconnected members 54 may comprise a polymer. The voids 52 may be empty or at least partially filled with a material different from the material of the interconnected members 54 (e.g. a different polymer). The interconnected members 54 may be arranged into cells, (e.g. hourglass or bow-tie shaped cells, as illustrated in Fig. 1b.

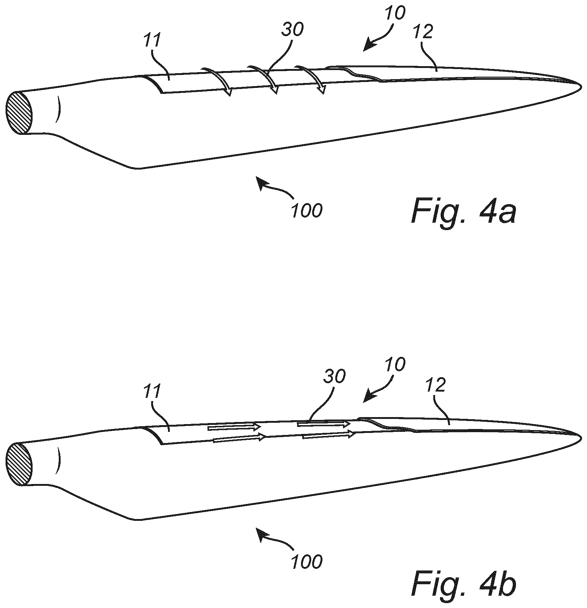

In case the auxetic material of the first layer 11 comprises a molecular auxetic material, the first layer 11 may be strained by 20% to 80% in at least one direction 30 in a plane of the first layer. If the erosion protection laminate 10 is arranged on a leading edge 110 of a propeller blade 100, the first layer 11 may be strained (e.g. by 20% to 80%) in a direction 30 perpendicular to the leading edge 110, as illustrated in Fig. 4a. Alternatively, the first layer 11 may be strained (e.g. by 20% to 80%) in a direction 30 parallel with the leading edge 110, as illustrated in Fig. 4b. A strained (or unstrained) first layer 11 may be attached to the second layer 12 to form the erosion protection laminate which may subsequently be attached to the to the object to be protected. Alternatively, the first 11 and second layer 12 may be sequentially applied to the object to be protected. The first layer 11 may be attached to the object to be protected in a strained manner, e.g. stretched over the surface to be protected. Subsequently, the second layer 12 may be attached to the first layer 11.

The first layer may e.g. have a thickness between 100 µm and 5 mm. In particular, the first layer may e.g. have a thickness between 100 µm and 1 mm.

In any of the presented examples, the second layer 12 may comprise epoxy and/or polyurethane. Further, the polymer of the second layer 12 may be non-porous. The polymer of the second layer 12 may have a density of at least 0.9 g/cm³, e.g. a density in the range of 0.9-1.5 g/cm³, or 0.9-1.2 g/cm³ or 1.0-1.2 g/cm³. Further, the second layer 12 may have a thickness between 100 µm and 15 mm.

In the above, the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. An erosion protection laminate (10), comprising a first layer (11) and a second layer (12) arranged over the first layer (11),
the first layer (11) comprising an auxetic material;
the second layer (12) comprising a polymer.

2. The erosion protection laminate (10) according to claim 1, wherein the erosion protection laminate (10) is arranged on a fiber-reinforced polymer (20), wherein the first layer (11) is facing the fiber-reinforced polymer (20).

3. The erosion protection laminate (10) according to claim 1 or 2, being a leading edge protection for a leading edge (110) of a propeller blade (100).

4. The erosion protection laminate (10) according to any one of the preceding claims, wherein the auxetic material of the first layer (11) comprises a molecular auxetic material.

5. The erosion protection laminate (10) according to claim 4, wherein the molecular auxetic material of the first layer (11) comprises a polyurethane liquid crystal and/or an acrylate liquid crystal.

6. The erosion protection laminate (10) according to claim 4 or 5, wherein the first layer (11) is strained by 20% to 80% in at least one direction (30) in a plane of the first layer (11).

7. The erosion protection laminate (10) according to any one of the preceding claims, wherein the first layer (11) has a thickness between 100 µm and 5 mm.

8. The erosion protection laminate (10) according to any one of the preceding claims, wherein the polymer of the second layer (12) comprises epoxy and/or polyurethane.

9. The erosion protection laminate (10) according to any one of the preceding claims, wherein the polymer of the second layer (12) has an abrasion resistance of at least 80 mm³ according to ISO 4649.

10. The erosion protection laminate (10) according to any one of the preceding claims, wherein the polymer of the second layer (12) is non-porous.

11. The erosion protection laminate (10) according to any one of the preceding claims, wherein the polymer of the second layer (12) has a density of at least 0.9 g/cm³.

12. The erosion protection laminate (10) according to any one of the preceding claims, wherein the second layer (12) has a thickness between 100 µm and 15 mm.

13. The erosion protection laminate (10) according to any one of the preceding claims, the erosion protection laminate (10) having a breakthrough time of at least 10 hours when tested to DNV GL RP 0171 standard with 26.5 mm/hr rain intensity.

14. The erosion protection laminate (10) according to any one of the preceding claims, the erosion protection laminate (10) having an incubation time of at least 10 hours when tested to DNV GL RP 0171 standard with 26.5 mm/hr rain intensity.

15. The erosion protection laminate (10) according to any one of the preceding claims, the second layer (12) of the erosion protection laminate (10) being a layer having a breakthrough time of at least 10 hours when tested to DNV GL RP 0171 standard with 26.5 mm/hr rain intensity.

16. The erosion protection laminate (10) according to any one of the preceding claims, the second layer (12) of the erosion protection laminate (10) being a layer having an incubation time of at least 10 hours when tested to DNV GL RP 0171 standard with 26.5 mm/hr rain intensity.
